# EUROPÄISCHE PATENTSCHRIFT

(11) **EP 2 148 110 B1**
(45) Veröffentlichungstag und Bekanntmachung des Hinweises auf die Patenterteilung: **18.08.2010**
(21) Anmeldenummer: 09163197.8
(22) Anmeldetag: 19.06.2009
(51) Int. Cl.: F16D 55/00, F16D 65/00

(54) **Abdeckung für die Bremsscheibe einer Fahrzeug-Scheibenbremse**
Cover for the brake disc of a vehicle disk brake
Revêtement pour le disque de frein d'un frein à disques de véhicule

(30) Priorität: 25.07.2008 DE 102008034591
(43) Veröffentlichungstag der Anmeldung: 27.01.2010
(73) Patentinhaber: BPW Bergische Achsen KG, 51674 Wiehl (DE)
(72) Erfinder: Klaas, Thomas, 51580, Reichshof (DE); Janzen, Hartmuth, 51674, Wiehl (DE)
(74) Vertreter: Christophersen, Ulrich Rudolf

(56) Entgegenhaltungen:
- DE-A1- 4 101 514
- US-A- 4 005 768

## Beschreibung

Die Erfindung betrifft eine Abdeckung für die Bremsscheibe einer einen achsfest neben und parallel zu der drehbaren Bremsscheibe angeordneten Träger aufweisenden Fahrzeug-Scheibenbremse, siehe DE-A-4101514, Fig. 4-6.

Zum Schutz von Fahrzeug-Scheibenbremsen gegen Schmutz und durch die Fahrzeugreifen aufgewirbelte Steine etc. werden an der Innenseite von Scheibenbremsen Abdeckbleche befestigt, deren Größe in etwa an den Durchmesser der Bremsscheibe angepasst ist. Die Befestigung derartiger Abdeckungen erfolgt üblicherweise, indem sie mit der Fahrzeugachse oder mit achsfesten Teilen des Fahrwerks verschraubt werden.

Ebenso wie die Scheibenbremse selbst sind auch die Abdeckbleche den dynamischen Kräften, welche auf das Fahrwerk wirken, ausgesetzt. Hinzu kommen, da derartige Abdeckungen häufig aus relativ dünnwandigem Blech bestehen, die strömungsdynamischen Kräfte durch den entlang streichenden Fahrtwind. Unter diesen Bedingungen zeigen Scheibenbremsabdeckungen häufig ein unerwünschtes Flatterverhalten.

Das Ziel der Erfindung ist es daher, eine diesbezüglich verbesserte Abdeckung für die Bremsscheibe einer Fahrzeug-Scheibenbremse zu schaffen.

Zur Lösung wird bei einer Abdeckung mit dein eingangs angegebenen Merkmalen vorgeschlagen, dass diese zur Festlegung an dem Träger mit einander gegenüberstehenden, in Achsrichtung versetzt zueinander angeordneten Anlageflächen versehen ist, von denen sich die eine Anlagefläche von der einen, und die andere Anlagefläche von der anderen Seite her gegen den Träger abstützt.

Da eine solcher Art gestaltete Abdeckung in beide Richtungen zugleich, d. h. zur Bremsscheibe hin wie auch von der Bremsscheibe weg abgestützt ist, zeigt sie im praktischen Fahrbetrieb selbst dann kein Hin- und Herschlagen, wenn sie aus Gewichtsgründen aus relativ dünnwandigem und damit tendenziell zum Schwingen neigendem Material hergestellt ist.

Gemäß einer vorteilhaften Ausgestaltung der Abdeckung sind die Anlageflächen zueinander federelastisch, wobei in spannungslosem Zustand ihr kürzester gegenseitiger Abstand geringer ist als die Bauteildicke des Trägers im Abstützbereich. Durch diese Gestaltung der Anlageflächen kommt es zu einem Verklemmen der Abdeckung auf dem Träger, wodurch der Gefahr eines Hin- und Herschlagens zusätzlich entgegengewirkt wird.

Gemäß einer weiteren Ausgestaltung ist die Abdeckung als einstückiges Formteil mit einem großflächigen, kreissegmentförmigen Abdeckbereich und zwei in Bezug auf die Bremsscheibendrehachse einander gegenüberliegenden Befestigungsbereichen gestaltet, wobei an den Befestigungsbereichen jeweils die beiden Anlageflächen angeordnet sind. Vorzugsweise sind die Befestigungsbereiche maulförmig mit einander zugewandten Maulöffnungen gestaltet. Dazwischen befindet sich ein Freiraum, durch den sich bei montiertem Abdeckblech die Fahrzeugachse erstreckt.

Eine weitere Ausgestaltung der Abdeckung ist gekennzeichnet durch von dem großflächigen Abdeckbereich zu den Befestigungsbereichen führende Übergangsbereiche, wobei nur eine der beiden Anlageflächen des Befestigungsbereichs bis an den jeweiligen Übergangsbereich heranreicht.

Weitere Vorteile und Einzelheiten ergeben sich aus der nachfolgenden Beschreibung der auf der Zeichnung dargestellten Ausführungsbeispiele. Darin zeigen:
- Fig. 1: in einer Ansicht das eine Ende einer scheibengebremsten Fahrzeugachse mit einer Bremsscheibe, einem Träger für die Scheibenbremse sowie einer an dem Träger befestigten Abdeckung;
- Fig. 2: die Gegenstände nach Fig. 1 in einer perspektivischen Ansicht von fahrzeuginnen her;
- Fig. 3: eine Abdeckung in perspektivischer Darstellung und
- Fig. 4: die Abdeckung nach Fig. 3 aus anderer Perspektive betrachtet.

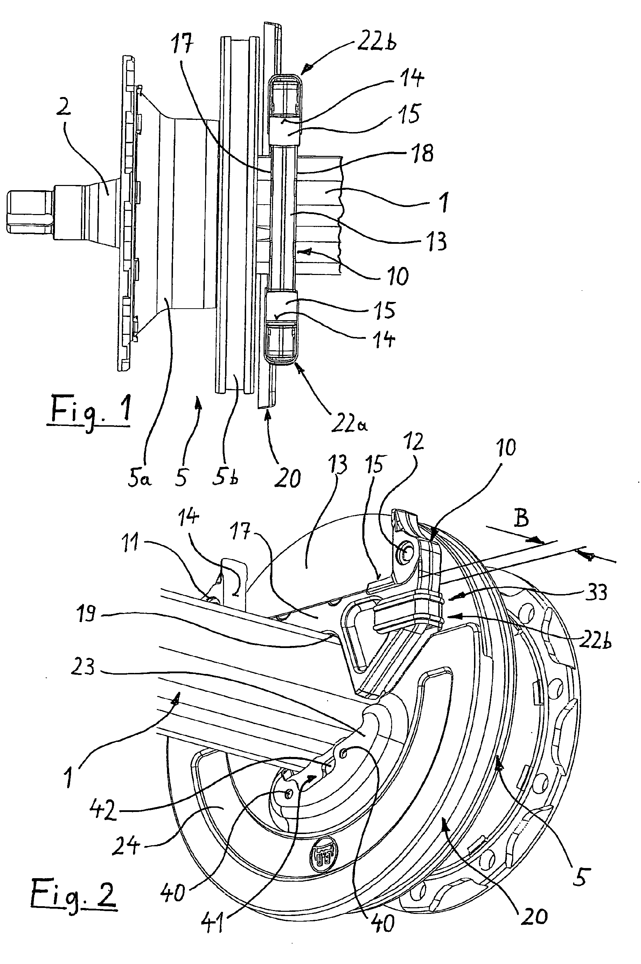

Fig. 1 zeigt in einer Seitenansicht eine Fahrzeugachse 1, wie sie z. B. als durchgehender Achskörper in Schwerlast-Anhängerfahrzeugen oder als Achse von Sattelaufliegern Verwendung findet. Die Fahrzeugachse 1 endet in einem Achsschenkel 2, auf welchem die hier nicht dargestellte Radnabe mit dem Fahrzeugrad gelagert ist. Dargestellt ist hingegen die mittels mehrerer Schraubbolzen an der Radnabe befestigbare Bremsscheibe 5. Diese setzt sich zusammen aus einem mit der Radnabe verschraubbaren Bremsscheibentopf 5a sowie einem Reibring 5b, welcher die Bremsscheibe im engeren Sinne darstellt.

An dem Achsrohr der Fahrzeugachse 1 ist, fahrzeuginnen in Bezug auf die Bremsscheibe 5, ein Bremsträger 10 angeschweißt. Dieser ist mit Befestigungen für den Bremssattel der Scheibenbremse versehen. Bei dem hier beschriebenen Ausführungsbeispiel ist an dem Bremsträger 10 eine Gleitsattel-Scheibenbremse festlegbar, wozu der Träger 10 an den Orten 11, 12 mit Bolzen für die Halterung und gleitende Führung des nicht dargestellten Bremssattels versehen ist.

Der Träger 10 ist mit einer nach außen offenen Ausnehmung 13 versehen. Diese bildet einen Belagschacht, in den sich der fahrzeuginnere Bremsbelag der Scheibenbremse einsetzen läßt. Zur Ableitung der an diesem Bremsbelag im Betrieb wirkenden Bremsreaktionskräfte ist die Ausnehmung 13 mit radialen und tangentialen Stützflächen 14, 15 versehen, an denen sich der fahrzeuginnere Bremsbelag abstützt. Hingegen befindet sich der fahrzeugäußere Bremsbelag, welcher von der anderen Seite her auf die Bremsscheibe 5 wirkt, unmittelbar im Bremssattel, und ist hier nicht dargestellt.

Der Träger 10 ist von flacher Gestalt und erstreckt sich quer zur Fahrzeugachse 1, d. h. seine eine Hauptseite 17 weist nach fahrzeuginnen und seine andere Hauptseite 18 nach fahrzeugaußen, wobei zwischen der äußeren Hauptseite 18 und der sich im Fahrbetrieb drehenden Bremsscheibe 5 nur ein geringer Axialabstand besteht.

Zur Befestigung an der Fahrzeugachse 1 ist der Träger 10 mit einer Ausnehmung 19 versehen, deren Kontur an die Umfangskontur der Fahrzeugachse 1, hier einen Rechteckquerschnitt, angepasst ist. Die Verbindung entlang dieser Konturen erfolgt durch Verschweißen des Trägers 10 mit der Fahrzeugachse 1.

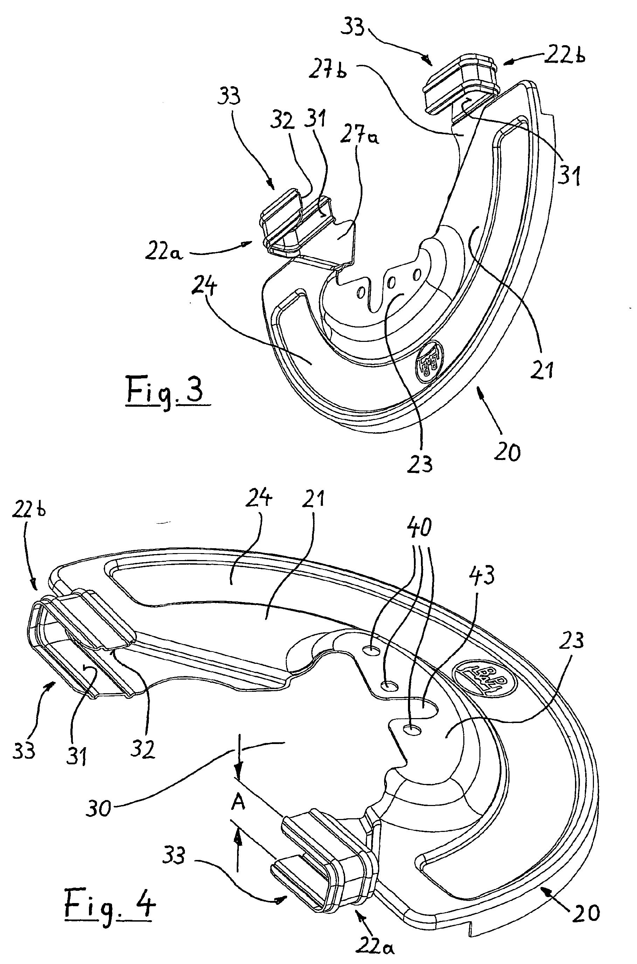

Da sich der Träger 10 vor allem quer zur Fahrzeugachse und damit zur Drehachse der Bremsscheibe 5 erstreckt, ist er in besonderer Weise zur Festlegung eines die Bremsscheibe 5 nach fahrzeuginnen hin schützenden Abdeckblechs geeignet. Dieses lässt sich, da es an der Übertragung von Bremskräften und Bremsmomenten nicht beteiligt ist, aus relativ dünnem Stahl- oder Leichtmetallblech im Wege der Kaltverformung herstellen, z. B. durch Stanzen und anschließendes Tiefziehen eines entsprechenden Blechformteils. Die Fign. 3 und 4 zeigen eine solche Abdeckung 20 in verschiedenen perspektivischen Ansichten. Im Wesentlichen setzt sich die einstückig aus einem einzigen Stahl- oder Aluminiumblech gestaltete Abdeckung 20 aus einem großflächigen Abdeckbereich 21 sowie zwei daran in Umfangsrichtung anschließenden Befestigungsbereichen 22a, 22b zusammen. Der Abdeckbereich 21 ist im Wesentlichen kreissegmentförmig mit einem Durchmesser gestaltet, der etwas größer als der Bremsscheibbendurchmesser ist. Er verfügt zur Erhöhung der Biegefestigkeit über eine beim Tiefziehen der Abdeckung 20 eingeprägte Versteifungssicke 24. Einwärts der Versteifungssicke 24 ist eine Teilfläche 23 des Abdeckbereichs 21 plateauförmig verformt, d. h. diese Teilfläche 23 erstreckt sich in einer gegenüber der übrigen Fläche des Abdeckbereichs 21 parallelen Ebene.

Von dem großflächigen Abdeckbereich 21 führen Übergangsbereiche 27a, 27b zu den Befestigungsbereichen 22a, 22b. Diese sind jeweils durch entsprechendes Biegen maulförmig mit einander zugewandten Maulöffnungen gestaltet. Zwischen den beiden Befestigungsbereichen 22a, 22b weist die Abdeckung 20 einen Freiraum 30 auf, der sich bis in den großflächigen Abdeckbereich 21 hinein erstreckt, und diesen nach radial innen hin begrenzt. Bei montierter Abdeckung 20 bietet der Freiraum 30 den erforderlichen Platz für die hier quer durch das Abdeckblech hindurchführende Fahrzeugachse.

Die maulförmige Gestaltung der Befestigungsbereiche 22a, 22b wird bei der Herstellung der Abdeckung 20 durch Biegeumformen erzielt, indem eine entsprechend gestaltete Lasche um 180° oder zweimal um 90° gebogen wird. So entsteht jeweils eine maulförmige Klammer 33 mit, an ihrer Innenseite, einer ersten Anlagefläche 31 und einer zweiten Anlagefläche 32. Die Anlageflächen 31, 32 stehen einander gegenüber und sind in Achsrichtung versetzt zueinander. Durch diese Anordnung der Anlageflächen 31, 32 wird eine Festlegung des Abdeckblechs 2 in axialer Richtung erreicht, ohne dass es in diesen Bereichen einer Verschraubung bedarf. Eine Verschraubung ist nur, wie noch beschrieben wird, im Bereich achsnaher Öffnungen 40 erforderlich.

Bei gemäß Fig. 2 montierter Abdeckung 20 liegt die erste Anlagefläche 31 von außen her, und die zweite Anlagefläche 32 von innen her an dem Träger 10 an. Der Träger 10 wird also von den Klammern 33 umgriffen. Zur Erzielung einer definierten Anlage kann der Träger 10 dort, wo sich die beiden Anlageflächen 31, 32 gegen ihn abstützen, mit geeignet geformten Gegenstützflächen versehen sein, z. B. Plateauflächen, die gegenüber der übrigen Hauptseite 17, 18 des Trägers 10 geringfügig vorstehen.

Für einen spielfreien Sitz der maulförmigen Klammern 33 auf den umklammerten Bereichen des Trägers 10 ist es von Vorteil, dass das durch die Klammer 33 gebildete Maul eine gewisse Federelastizität zeigt. Denn in nicht-montiertem und daher spannungslosem Zustand ist der kürzeste gegenseitige Abstand A der einander gegenüberliegenden Anlagefläche 31, 32 geringer, als die Bauteildicke B des Trägers 10 in dem umklammerten Abstützbereich. Zum Aufsetzen der Abdeckung 20 auf den Träger 10 müssen die beiden Klammern 33 daher geringfügig aufgeweitet werden, was aufgrund der Eigenelastizität des Materials keine Schwierigkeiten bereitet.

Von Vorteil ist, dass jede Klammer 33 zur Versteifung mit gegenüber den Anlageflächen 31, 32 zurückspringenden Sicken 36 versehen ist, wobei sich die Sicken 36 längs der maulförmigen Klammer erstrecken.

Bei dem hier beschriebenen Ausführungsbeispiel reicht die erste Anlagefläche 31 des jeweiligen Befestigungsbereichs 22a, 22b bis an den jeweiligen Übergangsbereich 27a, 27b heran, wohingegen sich die den anderen Schenkel der Klammer bildende zweite Anlagefläche 32 frei erstreckt und entsprechend federn kann. Die beiden Übergangsbereiche 27a, 27b überbrücken einen gewissen axialen Versatz dergestalt, dass sich der Hauptteil der Abdeckung 20, also deren kreissegmentförmiger Abdeckbereich 21, in einer axialen Ebene befindet, die zwischen der durch die ersten Anlageflächen 31 definierten Ebene, und der durch die zweiten Anlageflächen 32 definierten Ebene liegt.

Die plateauartig gestaltete Teilfläche 23 ist mit zwei Öffnungen 40 (Fig. 2) bzw. drei Öffnungen 40 (Fign. 3 und 4) versehen. Die Öffnungen 40 sind parallel zur Bremsscheibendrehachse ausgerichtet und dienen der Verschraubung der Abdeckung 20 mit der Fahrzeugachse. Gemäß Fig. 2 kann zu diesem Zweck an einem dem Bremsträger 10 abgewandten Umfangsbereich der Fahrzeugachse 1 eine Konsole 41 angeschweißt sein. In der angeschweißten Konsole 41 befinden sich parallel zur Bremsscheibendrehachse verlaufende Gewindebohrungen, mit denen die Öffnungen 40 der Abdeckung zwecks Verschraubung in Deckung gebracht werden müssen.

Eine Aussparung 42 in der Konsole 41 (Fig. 2) lässt zusammen mit einer hierzu teilweise fluchtenden Aussparung 43 in der Abdeckung 20 (Fig. 4) eine Durchtrittsöffnung frei. Durch diese kann ein Sensorkabel parallel zur Fahrzeugachse hindurchgeführt werde, z.B. das Signalkabel eines ABS-Sensors.

Da die Öffnungen 40 gemeinsam mit den ohne Verschraubung auskommenden Befestigungsbereichen 22a, 22b im Wesentlichen ein Dreieck aufspannen, wird eine gegenüber Fahrtwind- und Schwingungskräften sehr gute, flatterfreie Befestigung der Abdeckung 20 erzielt.

### Bezugszeichenliste

- 1: Fahrzeugachse
- 2: Achsschenkel
- 5: Bremsscheibe
- 5a: Bremsscheibentopf der Bremsscheibe
- 5b: Reibring der Bremsscheibe
- 10: Träger, Bremsträger
- 11: Ort
- 12: Ort
- 13: Ausnehmung
- 14: Stützfläche
- 15: Stützfläche
- 17: innere Hauptseite
- 18: äußere Hauptseite
- 19: Ausnehmung
- 20: Abdeckung
- 21: Abdeckbereich
- 22a: Befestigungsbereich
- 22b: Befestigungsbereich
- 23: Teilfläche
- 24: Versteifungssicke
- 27a: Übergangsbereich
- 27b: Übergangsbereich
- 30: Freiraum
- 31: Anlagefläche
- 32: Anlagefläche
- 33: Klammer
- 36: Sicke
- 40: Öffnung
- 41: Konsole
- 42: Öffnung
- 43: Öffnung
- A: Abstand
- B: Bauteildicke des Trägers

## Patentansprüche

1. Abdeckung für die Bremsscheibe einer einen achsfest neben und parallel zu der drehbaren Bremsscheibe (5) angeordneten Träger (10) aufweisenden Fahrzeug-Scheibenbremse,
**dadurch gekennzeichnet,**
**dass** die Abdeckung zur Festlegung an dem Träger (10) mit einander gegenüberstehenden, in Achsrichtung versetzt zueinander angeordneten Anlageflächen (31, 32) versehen ist, von denen sich die eine Anlagefläche (31) von der einen, und die andere Anlagefläche (32) von der anderen Seite her gegen den Träger (10) abstützt.

2. Abdeckung nach Anspruch 1, **dadurch gekennzeichnet, dass** die Anlageflächen (31, 32) durch eine 180°-Biegung einteilig miteinander verbunden sind.

3. Abdeckung nach Anspruch 1 oder 2, **dadurch gekennzeichnet, dass** die Anlageflächen (31, 32) an der Innenseite einer aus Flachmaterial maulförmig gestalteten Klammer (33) ausgebildet sind.

4. Abdeckung nach Anspruch 3, **dadurch gekennzeichnet, dass** die Klammer (33) zur Versteifung mit gegenüber den Anlageflächen (31, 32) zurückspringenden Sicken (36) versehen ist, und dass sich die Sicken (36) längs der maulförmigen Klammer (33) erstrecken.

5. Abdeckung nach einem der vorangehenden Ansprüche, **dadurch gekennzeichnet, dass** die Anlageflächen (31, 32) zueinander federelastisch sind, und dass in spannungslosem Zustand ihr kürzester gegenseitiger Abstand (A) geringer ist als die Bauteildicke (B) des Trägers (10) im Abstützbereich.

6. Abdeckung nach einem der vorangehenden Ansprüche, **dadurch gekennzeichnet, dass** diese als einstückiges Formteil mit einem großflächigen, kreissegmentförmigen Abdeckbereich (21) und zwei in Bezug auf die Bremsscheibendrehachse einander gegenüberliegenden Befestigungsbereichen (22a, 22b) gestaltet ist, wobei an den Befestigungsbereichen (22a, 22b) jeweils die beiden Anlageflächen (31, 32) angeordnet sind.

7. Abdeckung nach Anspruch 6, **gekennzeichnet durch** einen Freiraum (30) zwischen den zwei Befestigungsbereichen (22a, 22b).

8. Abdeckung nach Anspruch 6 oder 7, **dadurch gekennzeichnet, dass** die zwei Befestigungsbereiche (22a, 22b) maulförmig mit einander zugewandten Maulöffnungen gestaltet sind.

9. Abdeckung nach einem der Ansprüche 6 bis 8, **gekennzeichnet durch** von dem großflächigen Abdeckbereich (21) zu den Befestigungsbereichen (22a, 22b) führende Übergangsbereiche (27a, 27b) wobei nur eine der beiden Anlageflächen (31) des Befestigungsbereichs (22a, 22b) bis an den jeweiligen Übergangsbereich (27a, 27b) heranreicht.

10. Abdeckung nach einem der Ansprüche 6 bis 9, **gekennzeichnet durch** parallel zur Bremsscheibendrehachse ausgerichtete Öffnungen (40) zum Verschrauben der Abdeckung mit dem Träger (10) oder der Fahrzeugachse (1).

11. Abdeckung nach Anspruch 10, **dadurch gekennzeichnet, dass** sich die Öffnungen (40) auf einer am Innenrand des kreissegmentförmigen Abdeckbereichs (21) angeordneten Teilfläche (23) befinden, die sich in einer gegenüber der übrigen Fläche des Abdeckbereichs (21) parallelen Ebene erstreckt.

## Claims

1. A covering for the brake disc of a vehicle disc brake comprising a carrier (10) arranged in an axially fixed manner adjacent to and parallel to the rotatable brake disc (5), **characterized in that** the covering is provided for fixing on the carrier (10) with mutually opposed abutment faces (31, 32) which are arranged offset from each other in the axial direction and of which one abutment face (31) is supported from one side and the other abutment face (32) is supported from the other side against the carrier (10).

2. A covering according to claim 1, **characterized in that** the abutment faces (31, 32) are joined to each other in an integral manner by an 180° bend.

3. A covering according to claim 1 or 2, **characterized in that** the abutment faces (31, 32) are formed on the inside of a clamp (33) constructed in the form of a jaw from flat material.

4. A covering according to claim 3, **characterized in that** for reinforcement purposes the clamp (33) is provided with corrugations (36) directed away from the abutment faces (31, 32), and the corrugations (36) extend along the jaw-shaped clamp (33).

5. A covering according to any one of the preceding claims, **characterized in that** the abutment faces (31, 32) are resilient with respect to each other, and in the non-stressed state their shortest mutual distance (A) is less than the component thickness (B) of the carrier (10) in the support region.

6. A covering according to any one of the preceding claims, **characterized in that** it is designed in the form of a one-piece moulded part with a segment-shaped covering region (21) of large area and two fastening regions (22a, 22b) opposed to each other with respect to the axis of rotation of the brake disc, wherein the two abutment faces (31, 32) are arranged in each case on the fastening regions (22a, 22b).

7. A covering according to claim 6, **characterized by** a free space (30) between the two fastening regions (22a, 22b).

8. A covering according to claim 6 or 7, **characterized in that** the two fastening regions (22a, 22b) are designed in the form of a jaw with jaw openings facing each other.

9. A covering according to any one of claims 6 to 8, **characterized by** transition regions (27a, 27b) leading from the covering region (21) of large area to the fastening regions (22a, 22b), wherein only one of the two abutment faces (31) of the fastening region (22a, 22b) extends as far as the respective transition region (27a, 27b).

10. A covering according to any one of claims 6 to 9, **characterized by** openings (40) orientated parallel to the axis of rotation of the brake disc for bolting the covering to the carrier (10) or the vehicle axle (1).

11. A covering according to claim 10, **characterized in that** the openings (40) are situated on a partial area (23) which is situated on the inner edge of the segment-shaped covering region (21) and which extends in a plane parallel to the remaining area of the covering region (21).

## Revendications

1. Chape pour le disque de frein d'un frein à disque de véhicule présentant un support (10) disposé de façon fixée à l'axe à côté du ou en parallèle au disque de frein tournant (5),
**caractérisée en ce que**
pour la fixation au support (10), la chape est munie de surfaces d'appui (31, 32) opposées, disposées de façon décalée l'une par rapport à l'autre dans la direction axiale, l'une des surfaces d'appui (31) prenant appui sur le support (10) depuis un côté, et l'autre surface d'appui (32) prenant appui depuis l'autre côté.

2. Chape selon la revendication 1, **caractérisée en ce que** les surfaces d'appui (31, 32) sont reliées ensemble de façon solidaire par une courbure à 180°.

3. Chape selon la revendication 1 ou 2, **caractérisée en ce que** les surfaces d'appui (31, 32) sont réalisées sur la face intérieure d'une bride (33) façonnée en forme de mâchoire à partir d'un matériau plat.

4. Chape selon la revendication 3, **caractérisée en ce que** la bride (33), en vue d'un renforcement, est munie de moulures (36) en retrait par rapport aux surfaces d'appui (31, 32), et **en ce que** les moulures (36) s'étendent le long de la bride (33) en forme de mâchoire.

5. Chape selon l'une quelconque des revendications précédentes, **caractérisée en ce que** les surfaces d'appui (31, 32) sont déformables l'une par rapport à l'autre, et **en ce qu'**à l'état sans tension, leur espacement mutuel (A) le plus court est inférieur à l'épaisseur de composant (B) du support (10) dans la zone d'appui.

6. Chape selon l'une quelconque des revendications précédentes, **caractérisée en ce qu'**elle est façonnée comme une pièce moulée solidaire, avec une zone de recouvrement (21) en forme de segment de cercle de grande surface, et deux zones de fixation (22a, 22b) opposées par rapport à l'axe de rotation du disque de frein, respectivement deux surfaces d'appui (31, 32) étant disposées au niveau des zones de fixation (22a, 22b).

7. Chape selon la revendication 6, **caractérisée par** un espace libre (30) entre les deux zones de fixation (22a, 22b).

8. Chape selon la revendication 6 ou 7, **caractérisée en ce que** les deux zones de fixation (22a, 22b) sont façonnées en forme de mâchoire avec des ouvertures de mâchoire tournées l'une vers l'autre.

9. Chape selon l'une quelconque des revendications 6 à 8, **caractérisée par** des zones de transition (27a, 27b) menant de la zone de recouvrement (21) de grande surface aux zones de fixation (22a, 22b), une seule des deux surfaces d'appui (31) de la zone de fixation (22a, 22b) s'étendant jusqu'à la zone de transition respective (27a, 27b).

10. Chape selon l'une quelconque des revendications 6 à 9, **caractérisée par** des ouvertures (40) alignées en parallèle à l'axe de rotation du disque de frein pour le vissage de la chape avec le support (10) ou l'essieu de véhicule (1).

11. Chape selon la revendication 10, **caractérisée en ce que** les ouvertures (40) se trouvent sur une surface partielle (23) disposée sur le bord intérieur de la zone de recouvrement (21) en forme de segment de cercle, qui s'étend dans un plan parallèle par rapport à la surface restante de la zone de recouvrement (21).
